# EUROPEAN PATENT SPECIFICATION

(11) **EP 1 511 823 B1**
(45) Date of publication and mention of the grant of the patent: **21.04.2010**
(21) Application number: 03733683.1
(22) Date of filing: 04.06.2003
(51) Int. Cl.: C10B 47/02, C10B 53/00, C10G 1/10

(54) **INDIRECTLY HEATED WASTE PLASTIC PYROLYSIS DEVICE**
INDIREKT BEHEIZTE PYROLYSEEINRICHTUNG FÜR KUNSTSTOFFABFALL
DISPOSITIF A PYROLYSE A CHAUFFAGE INDIRECT POUR LES DECHETS EN MATIERE PLASTIQUE

(30) Priority: 05.06.2002 PL 35427202
(43) Date of publication of application: 09.03.2005
(73) Proprietor: Bogacka, Izabella, 02-939 Warszawa (PL); Lewandowski, Stanislaw, 02-939 Warszawa (PL)
(72) Inventor: Bogacka, Izabella, 02-939 Warszawa (PL); Lewandowski, Stanislaw, 02-939 Warszawa (PL)
(74) Representative: Patentanwälte Zellentin & Partner
(86) International application number: PCT/PL2003/000048
(87) International publication number: WO 2003/104354

(56) References cited:
- EP-A- 0 947 573
- EP-A- 1 101 811
- GB-A- 2 274 908

## Description

The invention subject is pyrolysis device for waste plastic, operated in normal high or law pressure.

In Poland plastic consumption is much lower comparing to high-developed countries. The amount of waste plastic, require utilisation, created in Poland is much bigger comparing to produced staff. There is a large number of plastic packages and products often of short-term use. Quantity of these is difficult to judge, but generally it is not less than 500 000 - 800 000 t/y. 100% of plastic packages after use are send to communal waste.

Selection is the primary problem of plastic recuperation. Plastic packages are not systematically collected in Poland. They are directed together with other waste to dumps. Selection of waste in Poland is manual in general. Waste shape, type, and pollution are related to their origin. The plastic waste created after use in many industry fields is collected and requires cleaning and selection. Waste collected directly at users side does not guarantee cleanness. Specially difficult and expensive possesses plastic from communal waste, because of high investments for selection and cleaning. The base for any type of plastic mix selection, is determination of its components. Tests to use for these purpose spectrometry, X-ray fluorescent spectroscopy, and close infrared spectroscopy, neutron spectroscopy, optical and thermo-optical methods are run in many places. Some of them are used in practice.

The method of selection depends on the waste status, full size parts, in pieces or crushed. The waste transported on conveyors are selected manually or mechanically with opto-electronic devices. After preliminary crumble of the waste mix, it is necessary to eliminate contamination's possible to remove with air classification and magnets (metals), as well as further crumble. The following stage of waste processing is removal of minerals more heavy than wash water (sand, clay, earth), removal of floating particles (wood, paper, tobacco) and dissolvable elements as (salts, fats, milk powder).

Plastic waste can be crumble-wet method too. To separate plastic, differences in their physical and chemical propriety as density, dielectric constant, solubility, wettability, heat and dielectric conductivity, softening temperature etc. can be used. The flotation method allows separation of polyolefines (PE-HD, PE-LD and PP) and settling fraction (PVC, PS, PA) from mix of typical package thermoplastics. This separation method disadvantage, is lack of plastic type segregation. Hydrocyclone method of separation is much more efficient, however it does not allow to separate polymers. The separation methods based on density differences are generally used in separation of polyolefines (PE and PP) from other polymers of higher density. Separation of PVC from PET or PE from PP within this method is absolutely impossible. Thermodynamical incompatibility of plastics creating limited miscibility creates separation possibility within selected solubility. (Rensselaer Polytechnic Institute, Troy, New York). This method is based on successive solvent dissolution of following plastic mixture components. As result, the polymers from the mixture are gradually recuperated.

Generally, there are three methods of plastic recuperation:
1. Recycling - direct reprocessing without chemical processes.
2. Raw material recycling - particles degradation to smaller fractions to be reused as monomers or raw material to produce it or other chemical products.
3. Thermal recycling - plastic waste burn and energy recuperation.
Thermal recycling can be applied to all kinds of plastics. There is no need for preliminary segregation or cleaning. Thermal recycling of plastic waste is destructive conversion of polymers contain in plastics to small particles compounds and use them as raw chemicals or fuels. There are four basic processes: pyrolysis, hydrocracking, gasification and burning.

Pyrolysis is process of thermal degradation of big particle compounds without other chemical raw materials. The method does not create ashes but only low carbonization - low calorie, highshed fuel or additive used in building industry. Construction of new waste plastic pyrolysis devices requires high investments, due to sophisticated reactor construction as well as flue gases cleaning and condensing system.

Literature describes many test, pilot and demonstration pyrolysis of waste installations whereas after gases are recuperated to heat the pyrolysis Owen partly or totally. The pyrolysis process is run in different types of reactors, mainly rotating drum ovens, tunnel ovens, or vertical reactors with movable or fluid beds. In some cases, if there are no direct connection with end users the recovered gas, after cleaning heats the pyrolysis reactor or is burnt in a torch. Generally, community waste are combustion in grate ovens, what creates deposit of melted polymers on the grates. Therefore, it is much more convenient to use rotating tube ovens where pyrolysis of waste together with boilers heating with gas fraction can occur. Also fluid bed ovens can be used (800-900°C). Combustion of plastic waste in conventional waste incineration plants does not solve the problem, because this process can be accompanied by emission of toxic gases dangerous for the environment. Above this, waste incineration plants are very expensive and in case of shut down due to break down or other reason new start up requires time and money.

Increasing amount of waste is incinerated due to limited number of waste dumps, waste increasing quantity, deposit growing up prices, and local community's protests against new dumps. Even the incineration plants reduce efficiently quantity of waste, but on the other hand they are source of environment pollution. Incineration of PVC is most controversial due to HCL, chloroorganic compounds and strong toxic dioxin emission during the process. The dioxins, since the Seveso accident in 1976 and their discovery in ashes and gases of a Dutch incineration plant in 1977 are the capital subject of all ecological discussions.

There is no efficient and cheap utilization method of plastics out of waste utilization, even in a small scale that will bring products to be used in other industry fields.

Pyrolysis of waste plastics requires large energy input. Therefore known today reactors are membranes heated with heating jacket, by hot flue gases. The heating surface as large as possible, to speed up achievement of plastic mix minimum temperature 500°C, is the construction principle of these reactors. There is an undoubted principle; the heating surface shall be as large as possible. Hydrocarbon fragmentation in decomposition process is highly endothermic-energy consuming. Therefore it is run in high temperature with maximum possible temperature difference between heating jacket wall and reacting hydrocarbons. However in temperatures over 500°C coke is created, and this process is increasing within temperature and time grow. This fact forces limits to use low concentration of hydrocarbons in inert gases or in case of liquids intensive mixing with circulating pumps and mechanical mixers. Evidently, it does not prevent creation of coke deposits on heating surface, but only decries speed of deposit grow. This process is very important in case of pyrolysis of hydrocarbons with macromolecule polymers, where limited addition rapidly increases viscosity and as result within intensive heat transfer multiplies coke depositing on heating wall. Despite intensive mixing it inhibits pyrolysis and at the same time changes pyrolysis product composition.

Pyrolysis devices which run at lower temperatures between usually 380°C - 400°C in order to avoid the generation of coke are well known from documents EP 0 947 573 A1, GB 2 274 908 A and EP 1 101 811 A2 for example. Therein , pyrolysis devices are disclosed which comprise a pyrolysis reactor, a waste plastic feeder, an outlet for pyrolysis products and the reactor having at least one heating element fixed inside the reaction chamber in a curved configuration. As stated above, the drawback of such pyrolysis devices running at lower temperatures is that they are rather slow and inefficient.

There is also known pyrolysis device with fluid reactor 2 m high, heated up to 700-800°C by membrane with sand as heating medium. The membrane heating is constructed as heating coil inside the reactor. The coil is heated with combustion gases. The heating coil is made of big diameter pipe as the heating surface ought to be as large as possible. This solution can be adopted for fluid reactors only.

Unexpected, it has been found, the heating walls of coil shaped heaters does not cover with coke, if they are immersed in melted depolymerizated plastics and the interior of the coil is heated directly with a burner flame. At least one heating pipe is inside the pyroliser reaction chamber and the pipe has coil shape and its length to diameter proportion is at least 10 and the most convenient 50-250. The pipe ought to be supported at least in one place. On the inlet side of the heating pipe a burner is installed. There are no coke deposits on despite heavy heat load of the pipe walls. During analysis of this process a speculation has been drowning, that this effect is due non-simultaneous fuel as coke develops at temperature ca 450°C, yet its weakness is too slow pyrolyctic process.

The problem, which has been successfully solved in the device incorporating the invention, is that in the all existing solutions:
Either the process is carried out at a high temperature (direct heating) in excess of 500°C but then coke that develops at 450°C settles on heating elements, or the pyrolyctic process is carried out at a temperature below the coke development point (ca. 400°C) by indirect heating the heating pipe located inside reactor with hot air, but then the reaction rate is not satisfactory.

The problem of combination of mutually exclusive strengths of the two solution types in a single device with concurrent elimination of their weaknesses has remained so far unresolved.

The device that incorporates the invention has enabled combination of strengths of devices, where the reaction is carried out at a high temperature (over 500°C) that facilitates fast pyrolysis, and of devices, where coke does not develop (temperature below 400°C) with concurrent elimination of the solutions' weaknesses. The process is carried out at a high temperature with concurrent preventing of settling coke on heating elements.

Unexpected, it has been found, the heating walls of coil shaped heaters does not cover with coke, if they are immersed in melted depolymerizated plastics and the interior of the coil is heated directly with a burner flame. At least one heating pipe is inside the pyrolyser reaction chamber and the pipe has coil shape and its length to diameter proportion is at least 10, preferably 50-250. The pipe ought to be supported at least in one place. A burner is fixed inside a heating pipe on the inlet side of the heating pipe. There are no coke deposits on despite heavy heat load of the pipe walls. During analysis of this process a speculation has been drowning, that this effect is due non-simultaneous fuel burn in pipe heating element. As result of heat distribution in heated mass is very effective and overheated depolymers layer is quickly, close to wall distributed, this prevents coke depositing, and prevents overheating of the surface despite increasing heat flow. Vibration are multiplied in the pipe - tube effect - and this energy is consumed by intensive self mixing close to heating element wall. Random variations of depolymers surface, variable viscosity and curve shape of heating pipe prevent device resonance. The heating element executed as slim pipe (high ratio of length and diameter) guarantees vibration and prevents coke depositing on it.

The usable polymers are shaped to forms of containers and folio. They consume large space in transport and warehousing. Therefore it is convenient to divide their reprocessing into two stages: Stage I - plastic alloy production, Stage II - depolymerization of the alloy. If the melting is run in high temperature, all included and absorbed pollution as water, carbonoxides, hydrogen chloride, etc. are removed as side effect. Above this, such alloy as uniform material creates possibility for process automation. The heating pipe shall be submerged in reaction liquid and to increase efficiency the burner flame ought to be blown directly into it, or burn the flame directly in it. The heating pipe should not directly touch device jacket because friction of vibrating parts can create damages and pass the vibrations to the whole device.

According to invent description the device can be operated under normal, high or low pressure. It is possible to design waste plastic reprocessing system with two parallel devices to return partly liquid pyrolysis products from the first to the second, with all construction and operation principles unchanged. This system effectiveness can be increased if the first device would work under normal and the second under high pressure. The following examples will explain invent idea without limit creation.

Example I. The device no.1 shaped as cigar, constructed out of 2000 mm long, 1626 mm diameter and 3 mm wall thick pipe, both ends with cover keeping collars 2. In the covers; front 3a and rear 3b, there were two openings in each. The front cover opening 4a, 105 mm diameter to fix inlet side of the heating pipe (7), and opening 5a to feed plastic mix (120 mm diameter) were connected with pump 6 - (screw conveyor). In the rear cover 3b one of the openings 4b was made to fix outlet of the heating pipe 7 (105 mm diameter) and the second 5b with 105 mm diameter to fix vapor outlet pipe 8. Outlet of the vapor pipe was connected with pipe space of counter stream cold water pipe cooler 9. The cooler 9 outlet was connected to separator 10. The separator 10 condensate was directed to tank 11 and gases to torch 12 to bum. The heat pipe 7 fixed in device 1, was 2300-mm long and 114.3-mm diameter, in middle part bend in S shape. The burner 13 was fixed on its inlet end. The device 1 was insulated with four layers of mineral wool and aluminum folio - 40 mm. thick.

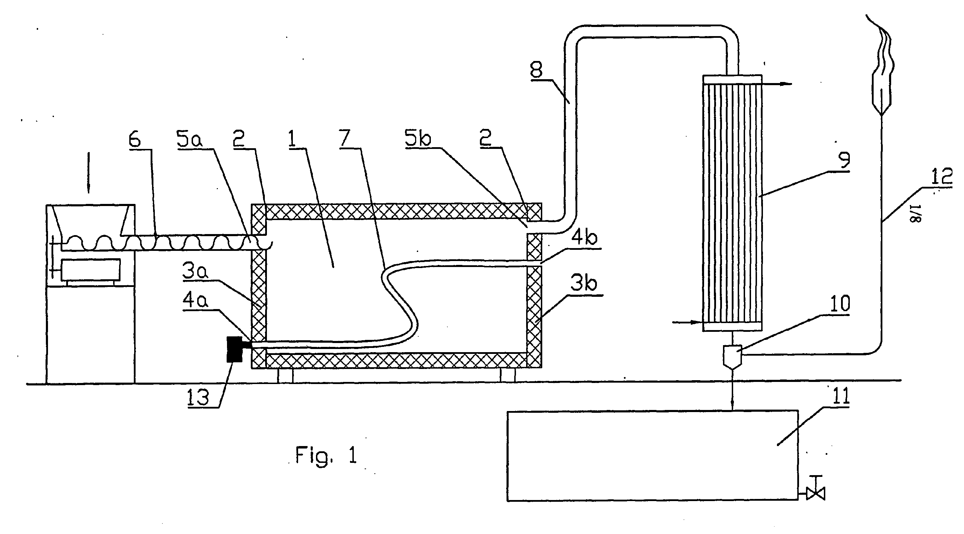

The plant schema is shown on drawing no.1.

The reactor has been loaded with 1200 kg previously prepared in 160°C plastic alloy with composition of 66% - polyethylene, 30% - polypropylene, 4% - polystyrene and burner 13 (R-20 GIERSCH) with 0.75 nozzle liquid fuel feed has been started. Burner 13 nozzle has been fixed at the inlet of heating pipe 7. In this given conditions, the burner has achieved 28.5 kW. Later, the device 1 has been heated till condensate traces were found in separator 10 behind cooler 9. Heating time was 24 h. The cooler 9 have been filled with water, and delivery of feed to the device 1 has been started. The feed, plastic mix composition 66% - polyethylene, 30% - polypropylene, 4% - polystyrene has been served in amount of 50 kg/h. Distillate speed receiving has been increasing within 8 hours and later was fixed on constant level 47-48 kg/h. Parallel, uncondensed gases emission has been increasing and they were directed to torch 12 and set fired. Process has been run for 60 hours, later heating was cut off and feed with plastic mix stooped. After 90 minutes, distillation has been stopped and gas emission decreased that flame of torch 13 went off. After next 60 hours, the device 1 has been cooled to allow unscrewing covers 3a and 3b to remove feed out of the device. There was no coke on the walls of the device 1 and heating pipe 7. In solidificated alloy at the bottom a small amount of dark deposit has been found. Together with alloy it was estimated for 11 I. This coke has been created mainly out of included paper (hydrocarbons).

| | Process | balance | |
|---|---|---|---|
| | | | |

| Used | | | Received |
|---|---|---|---|
| Alloy of charge plastic | 1200 kg | Alloy of other plastics | 1200 kg |
| Plastic mix | 3000 kg | Organic distillate | 2890 kg |
| Fuel consumption: | | Above this received : | |
| To preheat | 55,4 kg | Water distillate | 7 kg |
| For process operation | 156,4 kg | Torch burned gas | |
| | | Calculation | 10 kg |

Process effectiveness : 2890 : 3000 x 100 = 96,3%

Example II. Device 1 was cylinder, made of; 2000-mm long, 1626-mm diameter, wall thickness 3-mm pipe, both ends collar ended 2, to fix covers 3a and 3b. The device 1 has been insulated with mineral wool and aluminum foil. The front cover 3a was equipped with an outlet opening 5c (60-mm diameter) for hot vapors. Next to it was opening to deliver plastic mix 5a 120-mm diameter. Below those two on the front cover, there were two openings; in going 4a and outgoing 4b, both to fix U shaped heating pipe 7. The heating pipe 7 has been 4.25 m.- long, diameter 114.3- mm and 4.5-mm wall thickness. The burner 13 was fixed on inlet end of the heating pipe 7. The rear cover 3b has been equipped with opening to collect vapors 5b. In side the device 1, a division wall 14 has been constructed. The division wall made of plate, circle shaped, 1620-mm diameter, with cut at bottom part 700-mm high, has been welded 700- mm from front cover. Within this, the device has been divided into four chambers with no contact, if the liquid level is higher then 700- mm. The feeding opening 5a in the front cover was connected to pump - screw conveyor 6. The out going opening 5c was connected to condensing-deacidificating vapor device 15. The out going opening 5b in the rear cover 3b has been connected with vapor pipe 8b to short jacked cooler 16. After the cooler, separator 10a with a siphon valve, and condensing-separating device 17 has been installed. The device 17 was connected with separator 10b and than with condensing pipe cooler 9 ended with separator 10c, that de-aerationl valve was connected to retention gas tank 18 with max. capacity 4801. To the same tank de-aeration valve of condensing-deacidicating 15 was connected. Gases collected in this tank were used to fuel engine 19 driving electric generator 20. The engine exhaust pipe was equipped with catalyst. In separators, thermometers were installed. Condensate from separators was directed to tanks 11a, 11b, 11c.

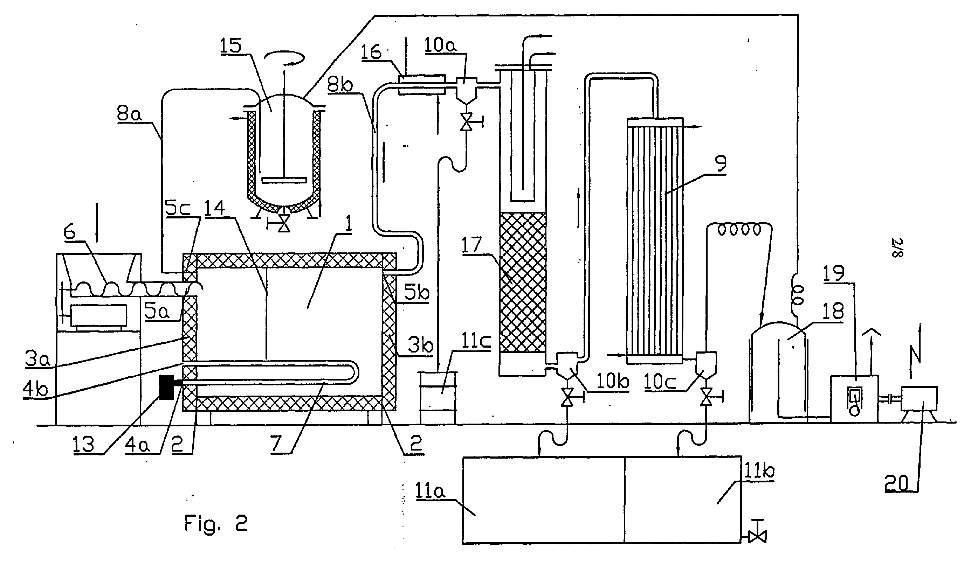

Drawing no.2 shows the plant schema.

The device 1 has been feed with 1200 kg of previously prepared plastic alloy. Solidification point of the plastic alloy was 115°C. Next, the burner 13 (R-20 GIERSCH) equipped with nozzle 1.5, liquid fuel feed has been started. The burner nozzle was fixed in inlet of heating pipe 7. During the given process condition, the burner has got output 57.0 kW. As it was reached, the device has been heated till the first drops of condensate showed up in the first separator 10a after short cooler 16. The heating took 13 hours. Cooling and mixing processes has been initiated in condensing-deaciditicating device 15 and next delivery of plastic within 125 kg/h has begun. Distillate collecting efficiency has been increasing during 6 hours, later; it has decreased and after next 4 hours reached stability. The temperature in separators was controlled accordingly; the first 350-330°C, the second 160-170°C, the third 10-12°C. It has created distillate division into boiling temperature fractions: over 330°C - 17,5 kg/h., 340 - 165°C - 80,0 kg/h., 165 - 11 °C - 20,5 kg/h. Parallel speed of uncondensed gases emission from deaciditiation and condensing apparatus has been increasing. Those gases were collected in retention tank 18, but after, 40 kg of distillate has been received. After the tank was full in 30%, the gases were directed to generator engine and it has been started. Power generated beyond first 10 hours was 20,2kW - 20,4 kW. Process has been run for 120 hours calculated since, plastic was delivered, therefore 133 hours since burner has been initiated. Later, heating and delivery of plastics were cut off. One hour later the generator engine was cut off and later after next 35 minutes cooling and deaciditation devices. Connections of apparatus with gas tank have been disconnected but connection with deaciditation device was blocked that way only one aeration inlet has been left open. Later the plant was left to cool for 60 hours. Next, the devices were ventilated with nitrogen to remove flammable gases and left for next 20 hours. Later, the device (1) has been dismounted to remove plastic alloy. The walls of device and heating pipe were not covered with coke. A layer of dark deposit in solidificated alloy in the bottom has been found. Amount of it was calculated for ca.50 I. After analysis of average sample it was found, there was 19% of non-soluble in hot xylene substances. It was coke including ashes. Roasted with air access has given 47% of white ash.

| | Process balance | | |
|---|---|---|---|
| | | | |

| Consumed | | Received | |
|---|---|---|---|
| Plastic alloy | 1200 kg | Plastic alloy | 1200 kg |
| Mix composition | | | |
| As in example I | 15000 kg | Paraffin phase | 2100 kg |
| Used fuel: | | | |
| For heating | 50,4 kg | Oil phase | 9600 kg |
| For process | 620,0 kg | Gasoline phase | 2460 kg |
| | | Electric power | 2520 kWh |
| solution 150 kg 10% NaOH | | Calculated gases | 527 kg |
| for deaciditation | | Deaciditator | 463 kg |
| | | including organic phase | 261 kg |
| | | water phase increase | 52 kg |

Efficiency of liquid and solid hydrocarbons 96,14% calculated for plastic stock

Example III. Device 1 cylinder made of 4000-mm long, 1626-mm diameter, 3-mm wall thick pipe. Both sides ended with collar 2 to fix covers 3a and 3b. The covers were made of 8-mm thick plate. The device was insulated with 3 layers of mineral wool and aluminum foil, 40- mm each. The device 1 was divided into four chambers within welded inside three-partition 14 made of circular plates with parts cut off at bottom. Partitions diameter - 1620 mm, height of the cut off parts - 700 mm. The distances, the partitions were welded has been following 700 mm, 1400 mm and 2000 mm from the front cover. This arrangement has created four-chamber device of total length ca. 4000 mm. In the first partition wall, as close to the device wall, as possible, a round opening 21, 60-mm diameter has been made, to connect first and second chambers. There was a separate evacuation channel 5c, from the middle, smallest chamber. It was made as, a pipe 60-mm diameter, ended with collar 8a, welded to the device wall. In the upper part of front cover 3a, two openings have been done. First 5c for vapors and second 5a, close to it for feed. Both -120mm diameter. Distance between edges of the both openings was 240- mm. Therefore it was possible to fix collars for feed pipe 5a and vapor 5c. Two other openings have been made in lower part of the front cover. Both 105-mm diameter. First - inlet 4a with fixed burner 13, and second outlet 4b. Both openings were made in distance 100-mm. from device wall that allowed to fix collars of heat pipe and to fix the cover. Heating pipe 7a 4.25-m. long, 114.3-mm. diameter, 4.5-mm. wall thickness, was bend U shape. Distance between centre of 4a and 4b openings was 686 +/- 1 mm. In the rear cover was; 150-mm. vapor outlet opening 5b, and below it, two 105-mm. openings to fix heating pipe 7b. The heating pipe 7b was made in U shape out of welded pieces to create three coils. Heating pipe 7b total length was 11.0 m., diameter - 114.3 mm., wall thickness - 4.5 mm. Both heating pipes 7a and 7b were supported by supports 22 fixed 130 cm. from the cover, to prevent their pressure on the device 1 bottom. Both arms of the heating pipe 7b were supported. Vapors from opening in front cover were directed with 114.3/4.5-mm. diameter vapor pipe 8a to condensing-deaciditating device 15. 600-I. capacity jacked cooler equipped with mechanical agitator and bottom drain cooled this device. De-aeration was directed to gas retention tank 18. Vapors from middle chamber were directed by 60-mm diameter, 2-mm wall thickness pipe 8c, to filed with metal mesh column 17. The column was made out of pipe 200 cm. long, and 200/2-mm diameter. The vapors from bottom and de-aeration's from top were directed to gas retention tank 18. The column was counter-current feed with cold 2% solution of sodium carbonate. Solution was directed to close, cooled by cooling coil, 500 I. steel tank 24. where condensate has been collected too. Solution from the tank bottom was pumped by circulation pump and organic condensate was periodically evacuated. Vapors going trough opening in the rear cover were consequently directed by vapor pipe 8b (150/3.5 diameter) to short - 1 m. long - jacket cooler 16 ended with separator 10a, and next to 800-mm. diameter, 6 m. high column 17 with inside water coil of 6 m2 surface with connection to separator 10b and finally to pipe cooler 9 cooled with 5 do 6°C water, ended by separator 10c. Non condensed vapors were directed as previously to gas retention tank 18. Those gases were, later burned in combustion engine 19 driving electric generator 20. All separators were equipped with thermometers. Collected in there condensate, has been directed to tanks: 11a, 11 b and 11c.

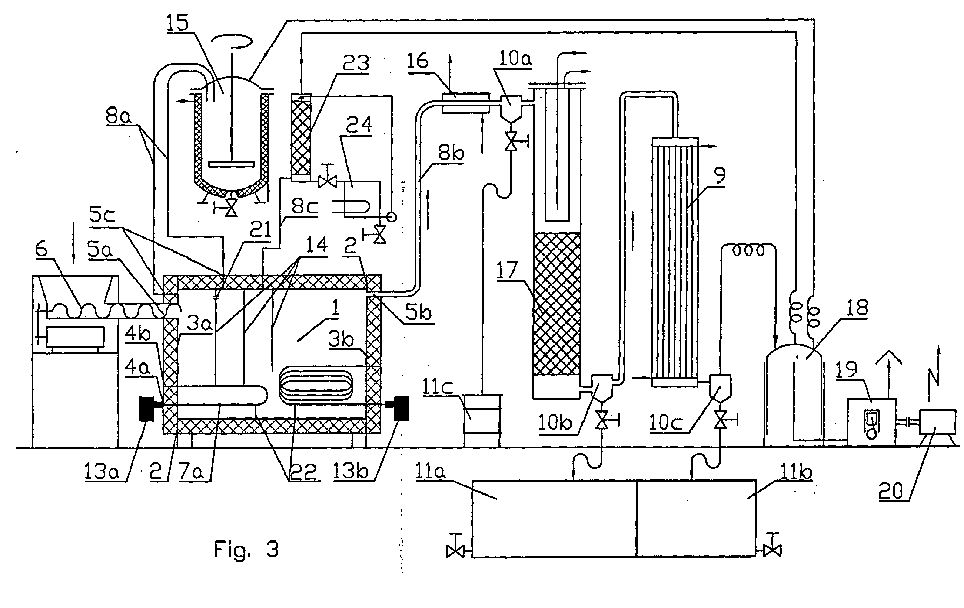

Schema of the plant is shown on drawing no. 3

The reactor was loaded with 2400 kg previously prepared plastic alloy of solidification temperature: 115 - 130°C. Next, two burners 13a and 13b were initiated. Both (R-20 GIERSCH) each with 1,5 nozzle and liquid fuel feed. The burners nozzles were fixed at inlet end of heating pipes 7a and 7b. The burners total output was 114 kW. Apparatus were heated for 12 hours, later burners has been cut off and dismounted. Nozzle of burner 13a from the front cover was replaced by 2.0 nozzle, and burner 13b from rear cover nozzle was replaced by 3.0 nozzle. Burners were started again, and their nozzles have been placed at inlet ends of heating pipes. Next, plastic delivery through screw pump 6 connected to opening 5a in front cover 3a was started. The feed was 500 kg/h. Later, the agitator in deaciditation-condensing device 15, condensing column 17 circulating pump, and whole cooling system were started. During the mean time, de-aeration's were not connected to gas retention tank 18. About one hour after second start up of the burners, the first drops of distillate were observed. After next 2 hours, distillation has been running in whole plant. Then, de-aeration was connected to gas tank and after it has been filed in 30%, the electric generator engine was started. 12 hours after replacement of burners nozzles, process has been stabilised.

The process parameters were following:

| | | |
|---|---|---|
| First separator : | 330°C - | 68,0 kg/h |
| Second separator: | 340 - 165°C - | 324,0 kg/h |
| Third separator: | 165 - 11°C - | 80,0 kg/h |
| Electric generator output: | | 82 - 83 kW |

Then, process has been run for 100 hours. Later plastic feed and heating were cut off, 60 minutes later electric generator engine was stooped and de-aeration of deaciditation apparatus, as well as, condensation column were disconnected.

After next 30 minutes cooling was cut off.

| Process balance. | | | |
|---|---|---|---|
| (Plastic mix composition as in example I) | | | |
| | | | |

| Consumed | | Received | |
|---|---|---|---|
| Plastic mix : | 50.000 kg | Paraffin phase | 6.800 kg |
| Deaciditation solution : | 200 kg | Oil phase | 32.400 kg |
| 10% NaOH | | Gasoline phase | 8.000 kg |
| 2% Na₂CO₃ | 200 kg | | |
| consumed fuel | 1.764 kg | Electric energy | 8250 kWh |

Comparing to the example II, results were similar above slightly higher efficiency of oil phase - boiling phase in temperature range 340 - 165°C and much better delivered energy utilisation :

| | | | |
|---|---|---|---|
| Example II - | 500 kg/h plastics | - | 20,16 kg/h fuel |
| Example III - | 500 kg/h plastics | - | 17,64 kg /h fuel |

Therefore process energetic efficiency was 71%.

Example IV. Device 1 cylinder shaped made of : 2000-mm long, 1626- mm diameter, 3-mm. wall thickness, pipes. Both ended with collars to fix covers 3a and 3b. The covers made of 8-mm. plate. All made of OOH18N9 steel. The device was alternately insulated with four 40-mm thick layers of mineral wool and aluminum foil. The device was positioned on bottom cover; therefore in operation position it looks as short, big diameter column. In the bottom cover 3b, were made two big diameter 115 mm openings 4a and 4b to fix heating pipe 7, and one drain with drain valve. The drain diameter was 40 mm, connecting pipe diameter was 50 mm, and valve diameter was 2 inches. The heating pipe was rolled into three coil helices, supported in two points with support 22. The supports were made of square in cross section, bars. The heating pipe was collar fixed to inlet opening 4a and outlet 4b. The heating pipe 7 had diameter 114,3 mm, wall thick 6,3 mm, and total length 14,20 m. The upper cover had two openings: delivering 5a 430 mm diameter, and outlet opening for vapors 5b 130- mm diameter. To the delivery opening a three- way pipe was fixed by collar. The T-pipe was made of 457 mm diameter pipe, wall thickness 10,0 mm. Its side opening was connected with screw conveyor 6, delivering alloy of plastic mix from granulator. The vapor opening 5b was connected with 133 mm diameter, 4.0 mm wall thick pipe to condensing system. The condensing system was build of: short, 0,2 m² cooling surface, Liebig radiator 16, ended with separator 10a, from where vapors were transferred to short condensing-separating column 17. The cooling surface of column 17 was 6 m². The column 17, co-current operated with controlled cooling, was ended by separator 10b, connected with vapor condenser - pipe cooler 9, surface 8m², ended with separator 10c. Non condensed gases were transferred to 480 litres capacity, gases retention tank 18. The retention tank 18 was connected with electric generator engine. Temperature in separators was control, that in the separator after cooler was 340 - 330°C, after co-current column 150 - 170°C, after condenser ca. 15°C. Liquid collected in separators was transferred to tanks 11a, 11b and 11c.

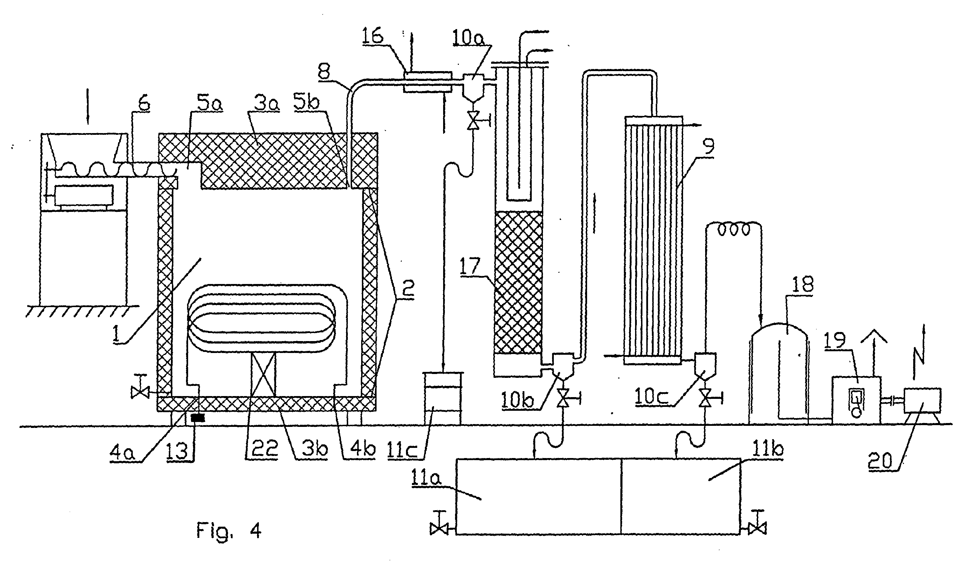

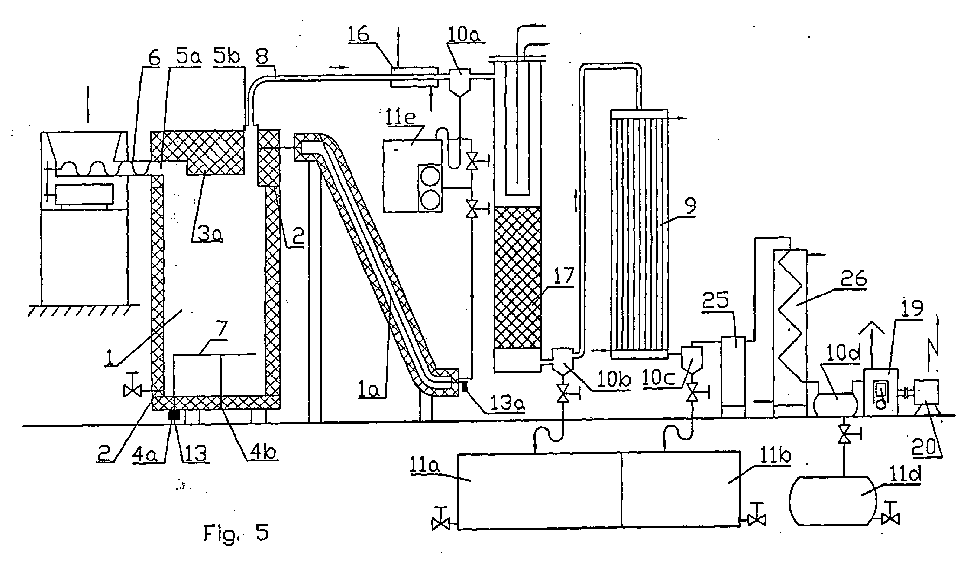

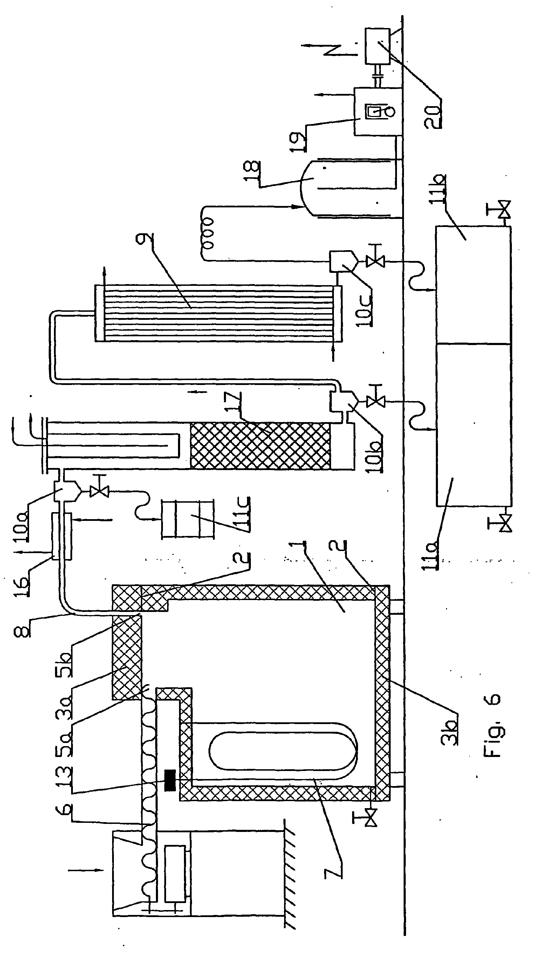

Schema of the plant is presented on drawing no. 4.

The device was loaded with 1.000 kg of previously prepared melted plastic granulate. The granulate solidification point was ca. 120°C. Next, burner 13 (R -20 GIERSCH) with 0.75 nozzle, liquid fuel feed was started. The burner nozzle was installed in inlet of heating pipe 7. After three hours the burner has been cut off, dismounted and nozzle changed for 3.00. The burner was fixed in inlet end of the heating pipe and restarted. In given conditions, increasing pressure of fuel, the power output has reached 128 - 130 kW. Later the device was heated till over 200°C has been reached in the first separator. Heating time was 6 hours. Within this time cooling has been started, and next, after 15 minutes feeding of 345 kg/h of melted plastic granulate has started. Distillate receiving speed has been increasing during 5 hours, Later process was stabilized on following level: separator after cooler 49 kg, separator after co-current column 226 kg, separator after condenser 56 kg. Parallel, gases emission that was consumed in electric generator engine has been stabilized. The electric generator power output was stabilized on the level of 77,6 - 77,8 kW. The process was run for 100 hours calculating since delivery of plastics has been started, later in sequences; heating and granulate feeding were cut off. After 40 minutes, vapor emission was, so low that electric generator engine has had to be stooped. After next 20 minutes, cooling was stooped and system has been left for 36 hours. 960 kg of device feel was evacuated through drain valve. In temperature 126°C it were liquid, but solidificated in 71°C. Further 40 kg was removed after next 70 hours, when temperature had dropped to 30°C. After analysis of an average sample, there were 84% of soluble in toluene substances, therefore amount of created coke has been estimated as 6,4 kg.

| Process balance. | | | |
|---|---|---|---|
| Consumed: | | Received: | |
| Plastic alloy | 34.500 kg | Solidification phase | 4.900 kg |
| Fuel for heating and | | | |
| process | 1165, 1kg | Oil phase | 22.600 kg |
| | | Gasoline phase | 5.600 kg |
| | | Electric power | 7.800kW |
| | | Calculated gases | 1.383,6 kg |

Liquid hydrocarbons efficiency calculated to plastic alloy charge was 95,94%.

Example V. Device was made of two parallel working apparatus. The first 1, was working under normal pressure, and the second 1a under higher pressure, and the second 1a has been working under 0,4 - 0,6 MPA pressure.. Condensing/separating apparatus were common. The normal pressure vessel was made out of 1626 mm diameter, 2000 mm long, 3 mm wall thickness pipe. The pipe on both collars ended to fix covers. The covers 3a and 3b were made of 8-mm plate. The whole device was constructed of 00H18N9 steel. The device was insulated sequentially with four layers of mineral wool and aluminum foil, each 40 mm thick. It was positioned on bottom cover as column. There were two openings the bottoms cover; inlet 4a and outlet 4b for heating pipe 7. Both 115 mm diameter. Beside them, there was a 40 mm drain opening to fix 50 mm diameter drainpipe with 2-inch valve. The heating pipe 7, 114.3 mm diameter, 4.5 mm wall thickness, was bend into three coils. Due to construction reasons, pipe bending radius and fixing collar thickness - the distance between device bottom and heating coil was 308 mm. The heating pipe total length was 11,0 m. This pipe, was collar fixed to proper openings done in the device bottom. In the upper cover, two 430 mm diameter openings were made; 5a delivering and 5b vapor outlet. To both of them three-way pipes were fixed. Side arm of delivering T-way pipe was connected to screw conveyor 6 delivering alloy of plastics from granulator. The top arm of the same T-way pipe used for preliminary load, has been closed with screw fixed cover. The upper arm of the other T-way pipe was used for evacuation of vapors to condensing - separating device. The side arm has been used to take expanded vapors from higher pressure (0.4 - 0.6 MPa) operating device. This device was made of 323,9 mm diameter, 10.0 mm wall thick, 4,6 m long pipe, normal St37 steel. Both ends collar ended to fix covers. The pipe was bend on both ends in open angel 150°C therefore it's shape was as flat Z. The straight end parts were 35 cm long, and the middle part was 290 cm long. The device was insulated with five sequenced layers of mineral wool and aluminum foil, each 36 mm thick and covered with metal mesh. Inside of the device a heating pipe made of acid-resistance 00H17N14M2 steel was placed. The heating pipe dimensions were; 88,9 mm diameter, 4 mm wall thickness, and 4,6 m length. It was bend as device 1a. This pipe was welded to the upper cover centrally, and after installation to the bottom cover. The burner 13a was fixed at bottom end of the pipe 7b. Above inlet, delivering pipe was welded. This pipe equipped with spherical valve, dimension were; 17,2 mm diameter, 2,6 mm wall thickness. As drain identical pipe was fixed below. Both were made of 00H17N14M2 steel. Above outlet opening in the upper cover, a three-way pipe with 17,2 mm diameter and 2,6 mm wall thickness was welded. On side arm of this T-way pipe an over-pressure (0 to 1 MPa) manometer was fixed. The main arm was collar connected to sidearm of T-way pipe evacuating vapors from the device 1. Condensing / separating system was constructed as following; vapor delivering pipe 8 (159 mm diameter, 4,5 mm wall thickness) connected to cooler 16 (cooling surface 0,35 m²) ended with separator 10a. Further, a short, co-current condensing - separating column 17, ended with separator, has been installed. The column-cooling surface was 5 m². Down stream after column 17, was condenser - pipe cooler 9 of 8 m², ended with separator 10c. Further, compressor 25 (0.3 Mpa) and coil cooler 26 (2,5 m²), ended with separator 10d has been installed. Liquid from separator 10d was transferred to condensed gas tank 11d, and non-condensed gas has been transferred to electrical generator 20 engine 19. Each separator was equipped with thermometer. All coolers have possibility to control temperature with cooling water valve. First separator was connected with cooler 16. Liquid from the first separator was directed to 600-I capacity heated middle tank 11e. Temperature there was 50°C +/- 5°C. A gear pump installed there was pumping liquid paraffin at 1,5 MPa to pressure vessel 1 a through feed pipe. Liquid from other separators was directed to proper tank 11a and 11b. Liquid gases were transferred to tank 11d.

Schema of the plant has been presented on draw. 5.

The device 1 operated under normal pressure was loaded with 900 kg of previously prepared plastic alloy. Solidification temperature of the alloy was 120°C. Next, burner (R -20 GIERSCH) with 0.75 nozzle, liquid fuel feed, was stared. The burner was installed in inlet side of the heating pipe. After four hours burner has been cut off and was replaced by another with 3.00 nozzle. In given conditions and with slightly higher pumped fuel pressure achieved output was 128 - 130 kW. After this operation the device was heated till temperature 330°C in the first separator, right after short cooler, has been overfilled. Heating time was 6 hours. During the mean time the pressure vessel has been prepared for action. The middle tank collecting condensate from the first jacket cooler has been loaded with 280 kg of distillate collected from the first separator. This distillate was liquid in over 45°C. The electric heating was on, and when the temperature 60°C has been reached, the gear pump was initiated and 120 kg of distillate has been pumped to pressure vessel. The second GIERSCH burner with 0.75 nozzle was fixed in the heating pipe inlet end and started. After temperature 330°C has been overfilled in the first separator, screw conveyor had started delivery of plastic alloy. Delivery speed was 338 kg/h. Next, cooling process of the plant was initiated. 4.5 hours after pressure vessel heating was started, again the gear pump delivering raw material to pressure has been initiated. During this time, the manometer fixed at outlet of this device started to show pressure increase. At the same time loss of load in the middle tank was controlled to have at least half tank of melted distillate. Four hours later, condenser compressor and electric generator engine were started. After 8 hours regulation, stabilization of the system has been reached on following level: delivery of plastic alloy - 338 kg/h; temperature in separator after the first cooler 330 - 340°C with 48 kg/h of received distillate and fill up of the distillate 30 kg/h / to the pressure vessel 78 kg/h was delivered. Receipt from separator after co-current column was 283.0 kg/h with 160 - 170°C temperature; receipt from separator after condenser-pipe cooler was 67.0 kg; power output of electric generator 79.2 - 79.5 kW. The electric generator motor was burning non-condensed gases at constant pressure 0,3hPa and temperature 30°C in separator after coil cooler.

The process has been run for 80 hours, calculating since system work was stabilized. Later following items were cut off: delivery of plastic alloy and burner of the device 1, burner of the device 1a and it's raw material delivery, condenser compressor, electric generator motor. Next, the de-aeration valve in front of condenser compressor has been open. After 60 minutes, cooling has been cut off and system was left for 72 hours to cool down.

| Process balance: | | | |
|---|---|---|---|
| | | | |

| Consumed during 80 hours: | | Received during 80 hours: | |
|---|---|---|---|
| | | | |
| Plastic alloy | 27.040 kg | Oil phase | 22.640 kg |
| Solidification distillate | 2.400 kg | Gasoline phase | 5.360 kg |
| Burner fuel | 1.075,2 kg | Remain boiling in over | 20°C: |
| | | In gas tank | 304 kg |
| | | electric energy | 6.348 kW |
| | | Calculated gases | 1.126 kg |

Calculated loss - gases emitted to the atmosphere after system shut down ca.10 kg.

The rest left in the gas tank has been added to gasoline phase, therefore efficiency was:

| | | |
|---|---|---|
| Diesel oil / S content less than 0,05% / | | 76,9% |
| Low octane gasoline | | 19,2% |
| | Total | 96,1% |

Example VI. System similar to this described in example IV, but the heating pipe 7 has been made as two coils. It's inlet and outlet were fixed to the upper cover.

The achieved results were:

| Consumed | | Received | |
|---|---|---|---|
| | | | |
| Plastic alloy | 19.800 kg | Solidification phase | 2.820 kg |
| Fuel during 60 h. | 659 kg | Diesel oil phase | 12.960 kg |
| | | Gasoline phase | 3.180 kg |
| | | Electric energy | 4.662 kW |
| | | Calculated gases | 840 kg |
| Solid and liquid products efficiency ca - 95,7%. | | | |

Example VII. Device 1 has been made as high-pressure vessel. Body of the device was made of circle bend pipe. The ends were side touching at the device low end. On top of the device, a three-way pipe was fixed to transfer vapours to de-foaming device 29. The device 1, was made of 355.6-mm diameter, 8 mm wall thickness, and seamless pipe. The shape of the vessel has been achieved due to welding of two arches to sidearms of three-way pipe. This T-pipe was made also of 355,6mm pipe. Those arches had free arms 1070 mm extended with strait pipes. The strait extensions were positioned side to side. In the contact place, 120 mm diameter openings have been made. Edges of those openings were welded, creating circulation-opening 30. Therefore liquid in the vessel could circulate. Ends of the pipe were closed with covers. In one of the covers a 17,2 mm pipe with valve has been fixed. The heating pipe 7, diameter 88,9 mm, wall thickness 3 mm, made of 00H17N14M2 steel, has been installed inside the vessel. It has been positioned at the centre of inlet opening 5a. The ends of heating pipe went through covers and were welded to their edges. The heating pipe was 10.2 m long. At it's top point a three-way pipe was welded. The side arm of the T-way pipe was top directed. To this arm, a reducer was welded. It has been welded with narrow; 355,6/8 mm end. The wide; 406,4/8,8-mm end has been ended with gauge made of 20 mm plate. It's out side diameter been 980 mm and it was bottom cover of the de-foaming device 29. The de-foaming device 29 was made out of 813 mm diameter, 12.5 mm wall thickness, 1800-mm high pipe. The top of the de-foaming device was covers ended, and bottom gauge. The gauge was connected to outlet of the vessel - the side arm of the T-way pipe. To the de-foaming device covers, without whole cut, a T-way pipe 114,3/3,6- mm has been welded within one of the side arms. Later, a 25-mm opening in the cover was drilled. Next to the T-way pipe, a pipe with 0 -1,0 MPa manometer was welded. The other end of the T-way pipe was gauge ended. The side arm has been used for vapour evacuation. The second go-through arm, was blind gauged. In the middle of the blind gauge a throttle has been fixed. The throttle was constructed with a shaft 31 (24-mm diameter) conical ended, going through sealed opening. On the other end the shaft was threaded and let through threaded yoke. Therefore after a handle was fixed to the threaded shaft, pressure inside the vessel with vapour throttling has been possible. The whole plant was insulated with 40-mm layer of mineral wool with 5 aluminium foil layers. Next, it was positioned on special prepared platform on sand bed. Granulated, melted plastic, before delivery to the device were heated up to melting point in separate vessel and transferred to middle tank 11e. There they were mixed with heave distillate from the column. Then they were pumped by gear pump through feed pipe to the device. Vapours leaving device, after expansion were transferred to typical tray rectification column 27 (typical small refinery destination column). The column was operated under normal pressure. Column bottom liquid, heavy distillate was returned to the device 1. It was ca 2% of loaded raw materials. Non condensed gases were collected on column top. They were additionally cooled in pipe condenser 9 to 10°C. Next they were transferred to retention tank 18, and from there to burner heating the plant.

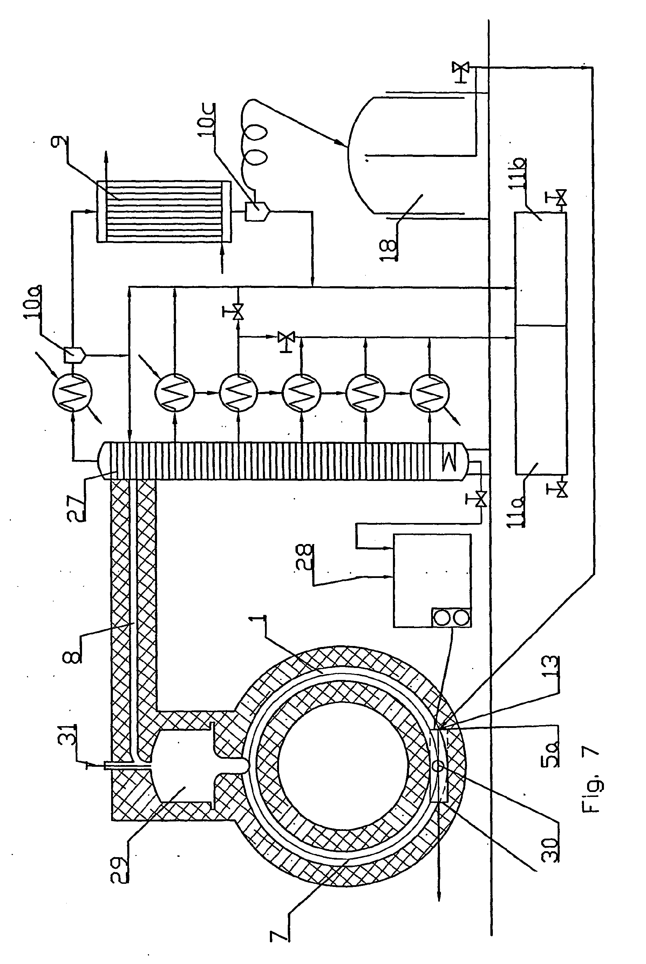

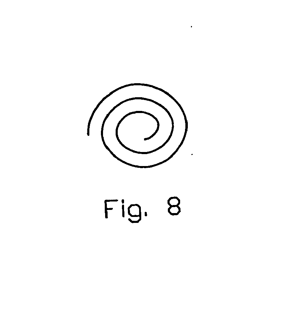

The plant schema is shown on drawing no. 7.

The heated vessel was loaded with 660 kg of plastic alloy. At this stage of the process, the heating burner was running with propane out of gas bottle. Latter, the burner was feed with gas from retention tank. Gas consumption was stabilised on 8,7 kg/h what has given 118 -120 kW, The throttle 31 was totally open. The heating was on till condensation of gas was observed in the column 27. It took 4 hours. During the meantime, heated up to 150°C, melted granulated plastic has been prepared in the middle tank 11e. When the middle part of the column has been heated, cooling was initiated and alloy delivery has begun. The raw material delivery has been stabilised at 259 kg/h. during raw material delivery stabilising; gas emission has been throttled with bar 31. Eight hours after the heating was initiated, gases has been directed to the retention tank, and 15 minutes later feed from the gas bomb has been cut off. After 9 hours of process adjustment operation parameters were following:

| | |
|---|---|
| Raw material delivery | 260 kg/h. |
| Oil phase | 200 kg/h |
| Gasoline phase | 49 kg/h |

After 100 hours of operation, the burner was shut down delivery of melted plastic stooped and surplus of gases released. The plant was left to cool down.

| Plant balance after 100 process hours | | | |
|---|---|---|---|
| Consumed: | | Received: | |
| | | | |
| Plastic alloy | 26.000 kg | Diesel oil phase | 20.000 kg |
| | | Gasoline phase | 4.900 kg |
| | | Electric energy | 1.300 kW |
| | | Calculated gas surplus | 2.300 kg |
| Efficiency: | | | |
| Liquid products | | 95,77% including: | |

| | |
|---|---|
| Oil components efficiency | 76,92% |
| Cetan value | 77 |
| Density at 20°C | 0,82 g/cm³ |
| Sulphur | less than 0,005% |
| Water pH | 6,6 |
| Boiling temperature range | 170 - 330°C |
| Ignition temperature | 55°C |

## Claims

1. Waste plastic pyrolysis device, operated under normal, high or low pressure, comprising a membrane heated reactor (1), a waste plastic feeder (6), an outlet for pyrolysis products and at least one heating element (7) which is fixed inside the reaction chamber as a curved heating pipe (7), wherein the length to diameter ratio of the heating pipe (7) is at least 10, **characterized in that** the burner (13) is fixed in an inlet end of the heating pipe (7) so that the interior of the heating pipe (7), where it is in contact with the waste plastic material, is directly heated by the burner flame.

## Patentansprüche

1. Pyrolysevorrichtung für Plastikabfälle, die unter normalem, hohen oder niedrigen Druck betrieben werden kann, umfassend einen geheizten Membranofen (1), eine Plastikabfall-Zufuhrvorrichtung (6), einen Auslass für Pyrolyseprodukte und wenigstens ein Heizelement (7), dass als ein gekrümmtes Heizrohr (7) in der Reaktionskammer befestigt ist, wobei das Längen/Durchmesser-Verhältnis des Heizrohrs (7) wenigstens 10 beträgt, **dadurch gekennzeichnet, dass** der Brenner (13) an einem Einlassende des Heizrohres (7) befestigt ist, so dass das Innere des Heizrohres (7), dort wo es mit dem Plastikabfallmaterial in Kontakt steht, direkt von der Brennerflamme erhitzt wird.

## Revendications

1. Dispositif de pyrolyse de déchets en plastique, fonctionnant sous pression normale, élevée ou basse, comportant un réacteur (1) à membrane chauffée, une alimentation (6) en déchets en plastique, une sortie pour des produits de pyrolyse et au moins un élément de chauffe (7) qui est fixé à l'intérieur de la chambre de réaction sous la forme d'un conduit chauffant incurvé (7), le rapport de la longueur au diamètre du conduit chauffant (7) étant au moins de 10, **caractérisé en ce que** le brûleur (13) est fixé dans une extrémité d'admission du conduit chauffant (7) de sorte que l'intérieur du conduit chauffant (7), où il est en contact avec les déchets en plastique, est directement chauffé par la flamme du brûleur.
